# FASCICULE DE BREVET EUROPEEN

(11) **EP 0 868 853 B1**
(45) Date de publication et mention de la délivrance du brevet: **26.02.2003**
(21) Numéro de dépôt: 98450001.7
(22) Date de dépôt: 16.03.1998
(51) Int. Cl.: A22C 15/00, B62B 3/00

(54) **Chariot pendoir pour viandes après abbattage**
Fleisch-hängander wagen
Meat-hanging truck

(30) Priorité: 18.03.1997 FR 9703503
(43) Date de publication de la demande: 07.10.1998
(73) Titulaire: Aquitaine Fluide Société à Responsabilité Limitée, 64121 Serres-Castet (FR)
(72) Inventeur: Baradat, Guy, 64000 Pau (FR)
(74) Mandataire: Thébault, Jean-Louis

(56) Documents cités:
- FR-A- 2 451 712
- GB-A- 200 312
- GB-A- 695 476
- US-A- 3 158 265
- US-A- 3 240 505
- US-A- 4 032 165

## Description

La présente invention a trait à un chariot pendoir pour le déplacement après abattage de divers animaux tels que notamment volailles, lapins, jambon, afin de les amener en salles de découpe et en chambres froides.

L'invention sera décrite dans son application en particulier aux volailles mais il est évident que d'autres usages peuvent être envisagés sans sortir pour autant du cadre de l'invention.

Dans les unités d'abattage, après plumage, les volatiles sont suspendus sur des chariots mobiles pour le transport et le stockage en chambre froide.

Les chariots actuels sont constitués en général d'une structure à tubes carrés soudés comportant des tubes horizontaux percés et traversés par des fers ronds servant de crochets pour suspendre les volatiles.

De tels chariots présentent de nombreux inconvénients.

Du fait de leur structure monobloc, ils sont encombrants et une place considérable est nécessaire à leur stockage.

Ils sont par ailleurs dangereux à cause des nombreuses pointes en saillie des crochets.

Enfin, au point de vue de l'hygiène, ils présentent l'inconvénient d'être difficiles à nettoyer. Tout d'abord, ce nettoyage doit être effectué en extérieur à l'aide d'appareils à pression d'eau, ce qui consomme beaucoup d'eau. Le caractère non démontable ne facilite pas le nettoyage et la structure comporte de nombreux nids à microbes notamment à la jonction des tubes, dans les angles au droit des soudures. Enfin, cette structure n'étant pas étanche, il existe de nombreux points de rétention d'eau, en particulier les montants qui se remplissent d'eau et également de déchets qui finissent par croupir et entraîner une dégradation rapide du matériel.

La présente invention vise à pallier ces inconvénients en proposant une structure de chariot beaucoup plus rationnelle, pratique d'emploi et hygiénique notamment.

A cet effet, l'invention a pour objet un chariot pendoir pour viandes après abattage, caractérisé en ce qu'il est constitué, d'une part, d'une paire de montants sur roues, formés de tubes à section externe non angulaire et munis d'éléments d'accrochage et, d'autre part, d'un jeu de modules d'accrochage amovibles, formés d'une plaque cintrée en forme de V évasé, munie à ses deux extrémités d'un élément d'accrochage complémentaire de ceux desdits montants, au moins l'un des bords longitudinaux de la plaque étant entaillé de place en place d'encoches de forme et dimensions appropriées à la réception en suspension des viandes à transporter.

Suivant un mode de réalisation préféré, les montants sont constitués à partir de tubes cylindriques, les éléments d'accrochage sont des crochets en tube cylindrique en forme générale d'équerre, les éléments d'accrochage complémentaires des modules étant des trous, lesdits éléments d'accrochage étant agencés de façon à permettre un emboîtement verrouillé entre modules et montants.

Avantageusement, chaque module comporte des entailles identiques sur ses deux bords longitudinaux, régulièrement distribués, en regard ou en quinconce.

Suivant un mode de réalisation, chaque module est constitué d'une plaque métallique cintrée dans sa partie centrale suivant un profil en toit formant raidisseur, butée de coincement en fond d'entaille et éventuellement gouttière de collecte notamment de sang.

D'autres caractéristiques et avantages ressortiront de la description qui va suivre d'un mode de réalisation du chariot de l'invention, description donnée à titre d'exemple uniquement et en regard des dessins annexés sur lesquels :
- Figure 1 est une vue en perspective d'un chariot selon l'invention ;
- Figure 2 est une vue de face d'un montant ;
- Figure 3 est une vue de droite du montant de la figure 2 ;
- Figure 4 est une vue de dessus d'un module d'accrochage ;
- Figure 5 est une vue partielle agrandie d'une extrémité du module de la figure 4 ;
- Figure 6 est une vue en bout du module ;
- Figures 7a et 7b représentent un crochet d'un montant ;
- Figures 8a et 8b représentent un renfort rapporté sur un module à hauteur du trou d'accrochage, et
- Figure 9 illustre schématiquement et partiellement l'extrémité supérieure d'un montant suivant une variante de réalisation.

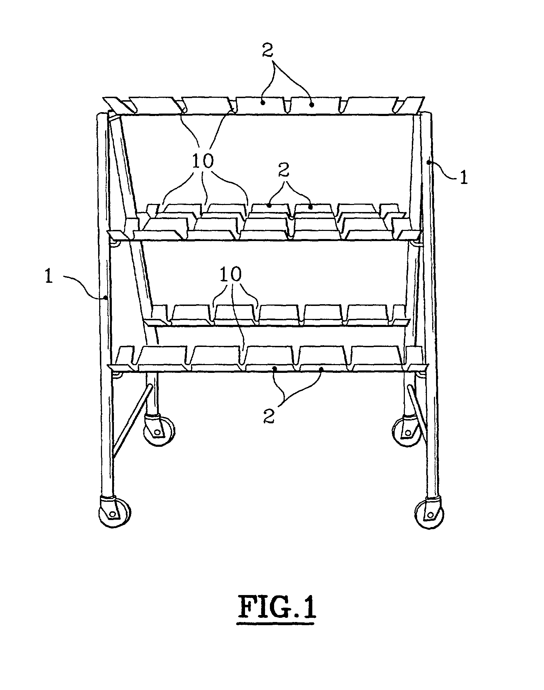

Sur la figure 1, on a représenté un chariot conforme à l'invention comprenant deux montants 1 symétriques reliés entre eux par des modules amovibles 2 identiques et au nombre de cinq répartis sur trois niveaux.

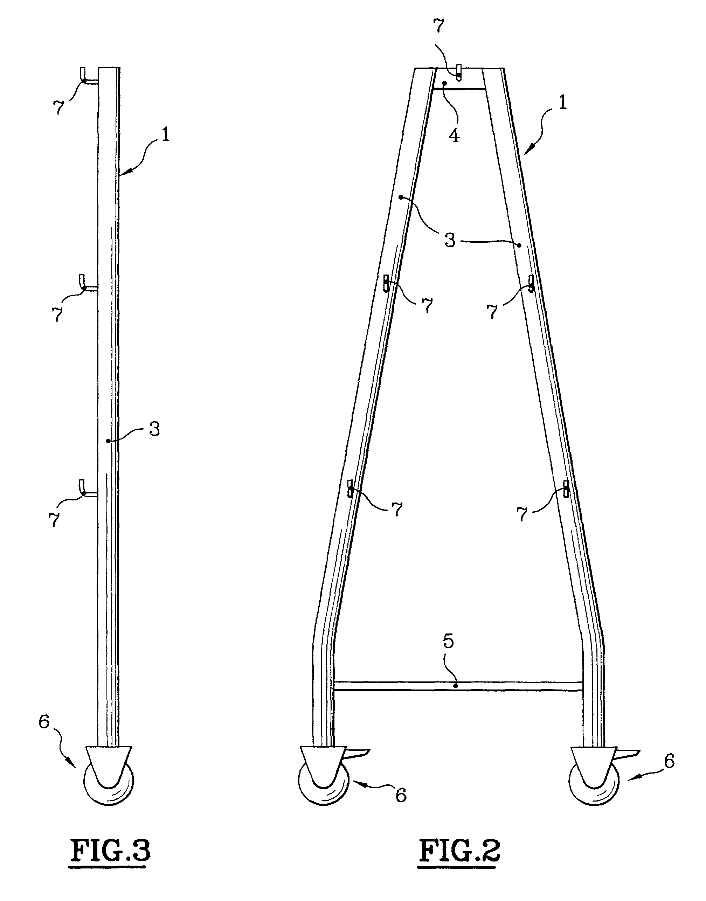

Les montants 1, représentés plus en détail sur les figures 2 et 3, sont constitués chacun à partir de deux tubes métalliques 3 en particulier en acier inoxydable, de section circulaire, reliés en partie haute et basse par une entretoise, respectivement 4 et 5, également en acier inoxydable.

A leur extrémité inférieur, les tubes 3 sont équipés d'une roue pivotante 6 à frein et à chape en acier inoxydable.

A hauteur de l'entretoise inférieure 5, les tubes 3 sont parallèles et, au dessus, sont inclinés l'un vers l'autre.

Sur la face interne de l'entretoise supérieure 4 est disposé un crochet 7 en forme générale d'équerre. Deux crochets 7 similaires sont agencés à un niveau intermédiaire sur le flanc interne des tubes 3, ainsi que deux autres crochets 7 à un niveau inférieur.

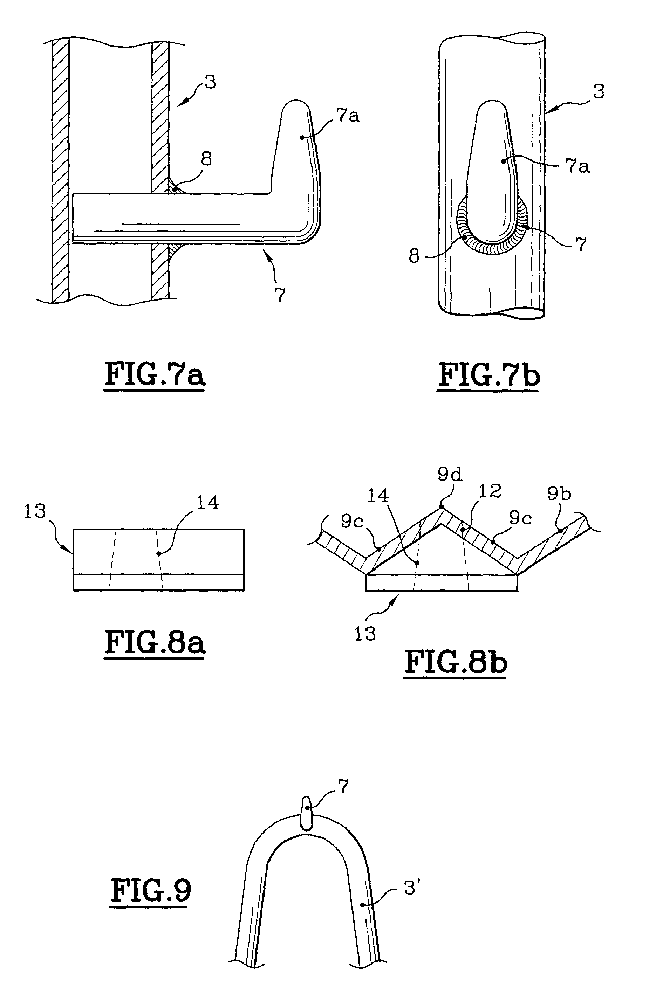

Sur les figures 7a, 7b, on a représenté plus en détail un crochet 7. Celui-ci est formé à partir par exemple d'un tube d'acier inoxydable de section circulaire, cintré à angle droit.

La branche verticale 7a du crochet est en outre usinée avec une certaine conicité, l'extrémité supérieure étant arrondie.

Le crochet 7 est de préférence engagé dans le tube 3 du montant et soudé à l'aide d'un cordon de soudure périphérique 8 formant congé de raccordement.

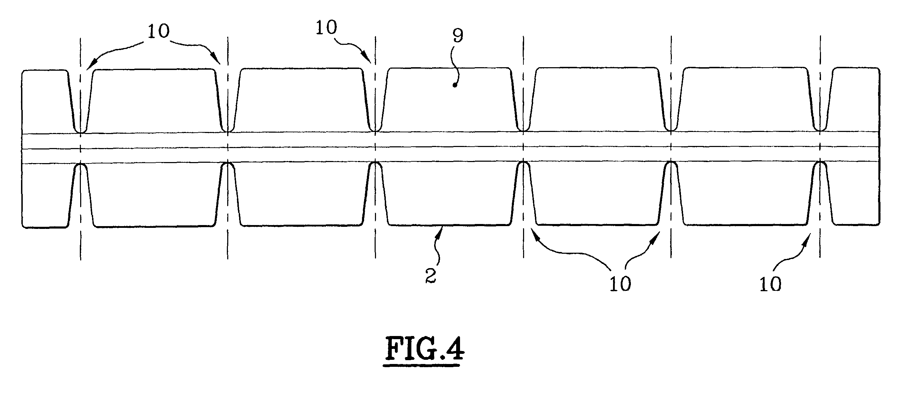

La figure 4 représente un mode de réalisation d'un module 2 d'accrochage constitué d'une simple plaque 9 par exemple en acier inoxydable.

La plaque 9 est rectangulaire, par exemple de 1160 mm de longueur, 200 mm de largeur et 3 mm d'épaisseur et ses deux bords longitudinaux sont entaillés de place en place par des encoches 10 en V à flancs relativement étroits, perpendiculaires auxdits bords.

Dans la variante illustrée par la figure 4, les entailles ou encoches 10 sont disposées symétriquement par rapport à l'axe longitudinal de la plaque 9 et séparées par des intervalles égaux, par exemple 200 mm. La profondeur des encoches 10 est de l'ordre de quelques dizaines de millimètres.

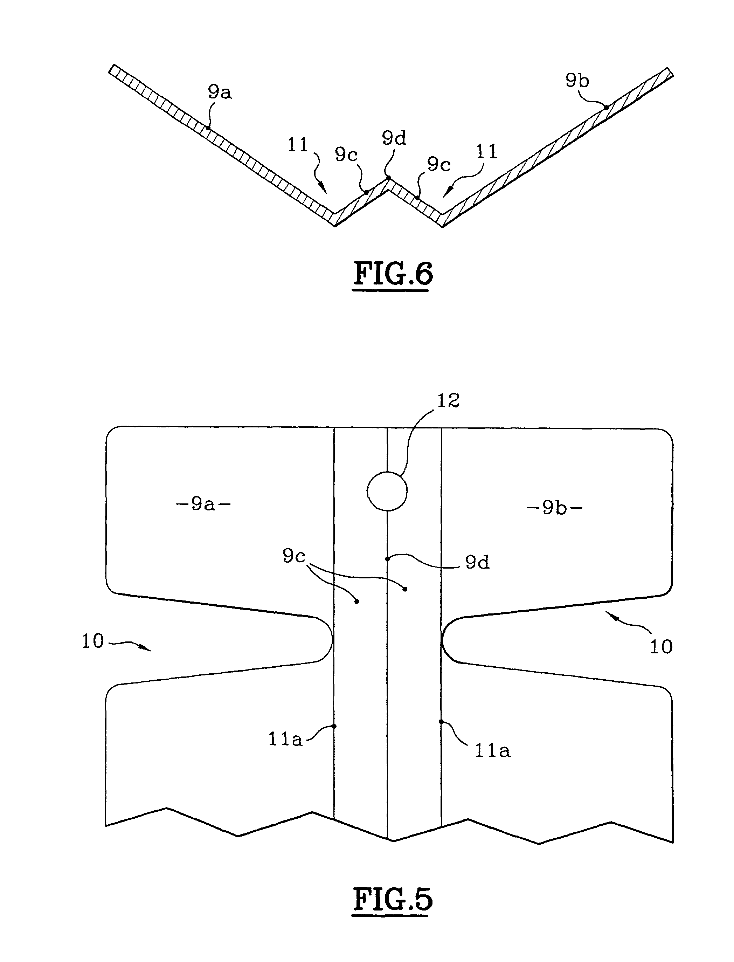

Avantageusement, la plaque 9 est pliée suivant le profil illustré en figure 6.

Le profil général de la plaque est un V très évasé définissant deux ailes 9a, 9b dans lesquelles sont entaillées les encoches 10 et entre lesquelles la zone de raccordement 9c est pliée en forme de toit dont l'arête faîtière 9d coïncide avec l'axe de la plaque 9.

L'intérêt d'un tel profil est multiple. Il rigidifie la plaque 9, définit des butées (flancs 9c) au fond des encoches 10 ainsi qu'un creux 11 (figure 6) en partie inférieure des ailes inclinées 9a, 9b.

Les encoches 10 s'étendent jusqu'au fond 11a des creux 11 mais peuvent se trouver éventuellement en retrait de ce fond 11a, ce qui permet aux creux 11 de servir de gouttière de collecte par exemple du sang de l'animal ou viande suspendu dans les encoches 10.

Les forme et dimensions des encoches 10 dépendent bien entendu de la nature de l'animal abattu ou des morceaux de viande ou abats à accrocher aux modules 2.

Aux deux extrémités de chaque module 2, dans l'axe, est percé un trou 12 circulaire de diamètre correspondant à celui de la partie sommitale de la partie tronconique 7a des crochets 7.

A hauteur de ces trous 12, sur la face inférieure des plaques 9 est disposée une platine 13 (figures 8a, 8b) en forme de coin, logée sous la partie en forme de toit 9c et soudée à la plaque.

La platine 13 est destinée à assurer un parfait emboîtement et coincement par simple gravité des modules 2 lorsque les crochets 7 sont engagés dans les trous 12. A cet effet, la platine 13 est percée d'un trou tronconique 14 correspondant à la partie 7a.

Une fois les modules 2 en place sur les montants 1, l'ensemble est parfaitement rigide et stable, aucun jeu ou mouvement relatif n'apparaissant entre les éléments assemblés, lors de la manipulation du chariot.

La structure d'un tel chariot est donc remarquablement simple. Son caractère facilement et quasi instantanément démontable le rend aisé d'emploi, à stocker et à transporter à vide. L'encombrement global des deux montants 1 formés de tubes dans un même plan et des cinq modules 2 superposés en s'emboîtant les uns les autres est en effet extrêmement réduit.

L'inclinaison des ailes 9a, 9b et le rétrécissement des encoches 10 permettent de coincer efficacement dans les encoches par exemple les pattes d'une volaille suspendue.

Dans le chariot représenté en figure 1, on peut éventuellement enlever un ou deux modules sans nuire à la stabilité du chariot, ces modules étant alors utilisables pour un autre usage.

Bien entendu, le nombre de modules 2 par chariot peut varier suivant la configuration et les dimensions des montants 1.

Le chariot de l'invention se nettoie très facilement. Il suffit de le démonter et de le faire passer dans le tunnel de lavage de l'atelier d'abattage, ce qu'il n'était pas possible de faire avec les chariots traditionnels.

Il n'est plus dès lors nécessaire de laver au jet avec les inconvénients rappelés plus haut (eau sale et perdue).

Le nettoyage est en outre facilité par l'arrondi des surfaces et des zones de raccordement et l'absence de recoins ou zones angulaires difficiles d'accès.

Le chariot ne présente par ailleurs aucune partie en saillie dangereuse, aucun des contours de la structure n'étant agressif.

La figure 9 illustre une variante suivant laquelle les deux tubes 3 d'un montant 1 est remplacé par un seul tube 3' cintré en son milieu pour former les deux jambes du montant. En partie supérieure dans la zone cintrée est soudé un crochet 7 du type des figures 7a, 7b.

Cette version est plus simple à réaliser et procure, en partie supérieure du montant, une surface plus simple, régulière et arrondie que la version de la figure 2 avec entretoise plate soudée 4.

L'écartement entre encoches 10 et la configuration de ces dernières peuvent varier suivant ce qui doit être suspendu au chariot (volaille, lapin, jambon, chevreau, abats, quartiers de viande, etc...)

Sur un même module 2, les encoches 10 d'un bord peuvent être décalées, par exemple en quinconce, par rapport aux encoches de l'autre bord. Des encoches peuvent être également prévues sur une seul bord.

Toute matière appropriée, à condition d'avoir la qualité "alimentaire", peut être utilisée pour réaliser le chariot.

## Revendications

1. Chariot pendoir pour viandes après abattage, **caractérisé en ce qu'**il est constitué, d'une part, d'une paire de montants (1) sur roues, formés de tubes (3) à section externe non angulaire et munis d'éléments d'accrochage (7) et, d'autre part, d'un jeu de modules d'accrochage (2) amovibles, formés d'une plaque (9) cintrée en forme de V évasé, munie à ses deux extrémités d'un élément (12) d'accrochage complémentaire de ceux desdits montants, au moins l'un des bords longitudinaux de la plaque étant entaillé de place en place d'encoches (10) de forme et dimensions appropriées à la réception en suspension des viandes à transporter.

2. Chariot suivant la revendication 1, **caractérisé en ce que** lesdits montants (1) sont constitués à partir de tubes cylindriques (3), les éléments d'accrochage sont des crochets (7) en tube cylindrique en forme générale d'équerre, les éléments d'accrochage complémentaires des modules étant des trous (12), lesdits éléments d'accrochage (7, 12) étant agencés de façon à permettre un emboîtement verrouillé entre modules et montants.

3. Chariot suivant la revendication 2, **caractérisé en ce que** lesdits modules (2) sont munis sur leur face inférieure, à hauteur desdits trous (12), d'une platine (13) percée d'un trou tronconique (14) dans le prolongement desdits trous (12), et coopérant avec une partie d'emboîtement tronconique (7a) desdits crochets (7).

4. Chariot suivant l'une des revendications 1 à 3, **caractérisé en ce que** lesdites plaques (9) des modules sont pliées dans leur zone centrale pour former une partie en toit (9c) définissant de part et d'autre un creux (11).

5. Chariot suivant la revendication 4, **caractérisé en ce que** lesdites encoches (10) sont ménagées dans les parties (9b) inclinées en direction desdits creux (11).

6. Chariot suivant la revendication 5, **caractérisé en ce que** les fonds des encoches (10) sont en retrait par rapport auxdits creux (11),

7. Chariot suivant l'une des revendications 1 à 6, **caractérisé en ce que** chaque montant (1) est formé d'un ou plusieurs tubes (3, 3') disposé dans un même plan et les modules (2) reliant les deux montants sont disposés suivant plusieurs niveaux.

## Patentansprüche

1. Fleischhängewagen, **dadurch gekennzeichnet, daß** er einerseits aus einem Paar von Beinen (1) auf Rollen, die aus Rohren (3) mit nicht eckigem äußeren Querschnitt gebildet und mit Verbindungselementen (7) versehen sind, und andererseits aus einem Satz abnehmbarer Verbindungsmodule (2) zusammengesetzt ist, die aus einer sich in V-Form trichterförmig erweitertenden gebogenen Platte (9) bestehen, die an ihren beiden Enden mit einem Verbindungselement (12) versehen ist, das komplementär zu denen der Beine ausgestaltet ist, wobei in mindestens einem der Seitenränder der Platte nebeneinander Kerben (10) vorgesehen sind, deren Form und Größe zur Aufnahme und zum Halten von zu transportierendem Fleisch geeignet ist.

2. Wagen nach Anspruch 1, **dadurch gekennzeichnet, daß** die Beine (1) auf der Basis zylindrischer Rohre (3) gebildet werden, wobei die Verbindungselemente Haken (7) aus zylindrischem Rohr in im wesentlichen gewinkelter Form sind, wobei die komplementären Verbindungselemente von Modulen Löcher (12) sind, wobei die Verbindungselemente (7, 12) derart ausgestaltet sind, daß ein verriegelndes Ineinanderinsetzen der Module und Beine ermöglicht wird.

3. Wagen nach Anspruch 2, **dadurch gekennzeichnet, daß** die Module (2) an ihrer Unterseite auf Höhe der Löcher (12) mit einer Halteplatte (13) versehen sind, die in Verlängerung der Löcher (12) ein kegelstumpfartiges Loch (14) aufweist, das mit einem kegelstumpfartigen Abschnitt (7a) der Haken (7) zum Ineinandersetzen zusammenwirkt.

4. Wagen nach einem der Ansprüche 1 bis 3, **dadurch gekennzeichnet, daß** die Platten (9) der Module im mittleren Bereich gefaltet sind, um einen Dachabschnitt (9c) zu bilden, der beidseitig eine Vertiefung (11) definiert.

5. Wagen nach Anspruch 4, **dadurch gekennzeichnet, daß** die Kerben (10) in den in Richtung auf die Vertiefungen (11) geneigten Abschnitten (9b) ausgespart sind.

6. Wagen nach Anspruch 5, **dadurch gekennzeichnet, daß** die Kehlen der Kerben (10) in die Vertiefungen (11) eingebettet sind.

7. Wagen nach einem der Ansprüche 1 bis 6, **dadurch gekennzeichnet, daß** jedes Bein (1) aus einem oder mehreren Rohren (3, 3') gebildet ist, die in der gleichen Ebene angeordnet sind, und daß die Module (2), die die beiden Beine verbinden, auf verschiedenen Höhen angeordnet sind.

## Claims

1. Meat-hook trolley for meat after slaughtering,
**characterised in that** it comprises on one part a pair of uprights (1) on wheels, formed by tubes (3) with a non-angular external cross-section and provided with attachment elements (7) and on another part a set of removable attachment modules (2), formed by a curved plate (9) in the shape of a splayed V, provided at both ends with an attachment element (12) complementary to those on said uprights, at least one of the longitudinal edges of the plate having notches (10) therein from place to place, with a shape and dimensions suitable for the reception in suspension of meat to be transported.

2. Trolley according to Claim 1, **characterised in that** the uprights (1) are formed from cylindrical tubes (3) and the attachment elements are hooks (7) made from cylindrical tube in the general shape of an angle bracket, the complementary attachment elements of the modules being holes (12), said attachment elements (7, 12) being arranged so as to allow a locked fitting between modules and uprights.

3. Trolley according to claim 2, **characterised in that** the modules (2) are provided on their bottom face, level with said holes (12), with a platen (13) with a frustoconical hole (14) therein in line with said holes (12), and cooperating with a frustoconical fitting part (7a) of said hooks (7).

4. Trolley according to one of Claims 1 to 3, **characterised in that** the plates (9) of the modules are folded at their central area in order to form a roof part (9c) defining a hollow (11) on etch side.

5. Trolley according to claim 4, **characterised in that** the notches (10) are formed in the parts (9b) inclined in the direction of said hollows (11).

6. Trolley according to claim 5, **characterised in that** the bottoms of the notches (10) are recessed with respect to said hollows (11).

7. Trolley according to one of claims 1 to 6, **characterised in that** each upright (1) is formed from one or more tubes (3, 3') disposed in the same plane and the modules (2) connecting the two uprights are disposed on several levels.
